(19) Europäisches Patentamt
European Patent Office
Office européen des brevets

(11) **EP 4 290 087 B1**

(12) **EUROPÄISCHE PATENTSCHRIFT**

(45) Veröffentlichungstag und Bekanntmachung des Hinweises auf die Patenterteilung:
**17.07.2024   Patentblatt 2024/29**

(21) Anmeldenummer: **23177714.5**

(22) Anmeldetag: **06.06.2023**

(51) Internationale Patentklassifikation (IPC):
*F15B 21/08* (2006.01)   *F15B 19/00* (2006.01)
*G05B 19/00* (2006.01)   *F15B 5/00* (2006.01)
*G05B 11/42* (2006.01)   *G05B 13/02* (2006.01)

(52) Gemeinsame Patentklassifikation (CPC):
**F16K 37/0041; F15B 9/03; F15B 19/005; F15B 21/087; G05B 11/42;** F15B 5/006;
F15B 2211/6303; F15B 2211/6313;
F15B 2211/6336; F15B 2211/6656;
F15B 2211/8613; F15B 2211/864; F15B 2211/8646;
F15B 2211/875; F15B 2211/8855

(54) **VERHINDERN VON REGELUNGSBEDINGTEN SCHWINGUNGEN DER POSITION EINES VENTILGLIEDS BEI EINEM VENTIL MIT PNEUMATISCHEM ANTRIEB**

PREVENTING CONTROL-INDUCED VIBRATIONS OF THE POSITION OF A VALVE MEMBER IN A PNEUMATIC DRIVE VALVE

PRÉVENTION DES VIBRATIONS LIÉES À LA RÉGULATION DE LA POSITION D'UN ÉLÉMENT DE SOUPAPE DANS UNE SOUPAPE À COMMANDE PNEUMATIQUE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **10.06.2022   DE 102022114745**

(43) Veröffentlichungstag der Anmeldung:
**13.12.2023   Patentblatt 2023/50**

(73) Patentinhaber: **Samson Aktiengesellschaft**
**60314 Frankfurt am Main (DE)**

(72) Erfinder:
• **Fiebiger, Andreas**
**65232 Taunusstein (DE)**
• **Vidal, Fausto Crespo**
**63505 Langenselbold (DE)**

(74) Vertreter: **Köllner & Partner mbB**
**Vogelweidstraße 8**
**60596 Frankfurt am Main (DE)**

(56) Entgegenhaltungen:
WO-A1-2010/054657     DE-B4- 102007 058 517
US-A1- 2001 037 159

## Beschreibung

Gebiet der Erfindung

Die Erfindung betrifft ein Verfahren zum Verhindern von regelungsbedingten Schwingungen der Position eines Ventilglieds bei einem Ventil mit pneumatischem Antrieb und Stellungsregelung des Ventilglieds, sowie entsprechende Vorrichtungen, insbesondere einen Stellungsregler, ein Ventil, eine prozesstechnische Anlage, sowie ein entsprechendes Computerprogramm und computerlesbares Medium.

Aus der Regelungstechnik ist bekannt, dass Regelverfahren wie z.B. Proportional-Regelung, Integral-Regelung, Differential-Regelung oder auch Kombinationen davon zum Ermitteln einer Stellgröße (z.B. einer Stromstärke, einer Spannung, eines Drucks) zum Steuern einer Regelgröße in Abhängigkeit von einer Regeldifferenz zwischen einem Istwert der Regelgröße und einem Sollwert eingesetzt werden können.

Ein proportionaler Anteil (P-Anteil) der Regelung wird direkt durch Gewichten der Regeldifferenz zwischen Istwert und Sollwert berechnet. Der Proportionalbereich ist der lineare Bereich des Reglers und wirkt sowohl unter- als auch oberhalb des Sollwertes. Der wesentliche Nachteil einer P-Regelung ist die bleibende Regelabweichung.

Ein integraler Anteil (I-Anteil) wird als zeitliches Integral der Regeldifferenz bzw. Regelabweichung berechnet und mit einem Verstärkungsfaktor $K_i$ multipliziert. Mit der Dauer der Regelabweichung ändert sich die Stellgröße, da durch den I-Anteil des Reglers die andauernden Regelabweichungen aufaddiert werden. Dadurch ändert sich die Stellgröße so, dass die Regelabweichung schließlich zu Null wird. Eine durch einen I-Anteil erzeugte zu große Stellgröße kann aber nur dann wieder abgebaut werden, wenn sich die Regelabweichung in ihrem Vorzeichen ändert, der Sollwert also mindestens einmal über- oder unterschritten wurde. Bei Reglern mit I-Anteil können daher Schwingungen um den Sollwert auftreten, die in aller Regel unerwünscht sind.

Schließlich bildet ein differentieller Anteil (D-Anteil) einen der zeitlichen Änderungsrate der Regeldifferenz proportionalen Anteil der Regelung. Der D-Anteil des Reglers reagiert folglich nicht auf die Dauer, sondern auf die Geschwindigkeit, mit der sich die Regeldifferenz zwischen Soll- und Istwert ändert. Durch die Änderungsgeschwindigkeit des Istwertes wächst die Stellgröße schneller an, als bei einem P-Regler. Durch den D-Anteil erreicht man ein schnelles, überschwingfreies Anfahren an den Sollwert. Der Regler reagiert schneller als ein reiner P-Regler. Nachteil ist aber auch hier eine bleibende Regelabweichung.

Der I-Anteil eines Reglers kann typischerweise durch zwei Parameter, Totzone und Verstärkungsfaktor $K_i$, eingestellt werden. Die Totzone unterdrückt im ausgeregelten Zustand Rauschanteile im Signal der Regeldifferenz, die z.B. durch Überlagerung der Regelgröße mit einem höherfrequenten Störsignal entstehen können. Dadurch verhindert sie unerwünschtes Oszillieren der Stellgröße des Reglers. Die Totzone hat eine einstellbare Breite. Befindet sich die Regeldifferenz innerhalb davon, wird sie auf den Wert null gesetzt. Der Verstärkungsfaktor $K_i$ ist ein einstellbarer Wert, der mit dem Signal des integrierenden Elements des Reglers multipliziert wird, um die Stellgröße des Reglers zu erhalten. Regelabweichungen werden bei hoher Verstärkung schneller abgebaut, doch erhöht sich damit die Gefahr, dass die Regelgröße schwingt. Eine zu hohe Verstärkung führt unter Umständen zu permanentem Schwingen.

Stand der Technik

Bei bekannten Ventilstellungsreglern, bei denen die Regelung einen I-Anteil hat, kann es zu Schwingungen der Positionsregelung kommen, wenn die Parameter des I-Anteils der Regelung nicht optimal eingestellt sind. Das liegt daran, dass der pneumatische Antrieb eines Ventils, insbesondere in Kombination mit Dichtungstypen, bei denen der Unterschied zwischen Haft- und Gleitreibung besonders groß ist, erst mit einer Verzögerung auf Steuerungsimpulse reagiert. Unmittelbare Ursache dafür ist die Kompressibilität der im Antrieb enthaltenen Luft. Im Falle einer hohen Haftreibung muss im Antrieb ein relativ hoher Druck aufgebaut werden, um diese zu überwinden. Ist sie überwunden, bewegt sich das Ventilglied bei relativ geringer Gleitreibung über die angestrebte Sollposition hinaus, da der Druck im Antrieb aufgrund der o.g. Kompressibilität der Druckluft im Antrieb nur langsam fällt. Das Resultat ist eine Hysterese zwischen der Stellgröße des Reglers (z.B. Stromstärke oder Druck) und der Position des Ventilglieds. Die Regelung mit Integral-Anteil findet in so einer Situation u.U. keine Ruhelage.

Da sich die Reibung der Dichtung, typischerweise einer Stopfbuchse, aufgrund von Verschleiß ändert, müssen die Parameter der Regelung im Laufe der Zeit angepasst werden, um eine gleichbleibende Regelgüte zu gewährleisten. Die Reibung kann sich z.B. verringern, wenn das Packungsmaterial in der Stopfbuchse aufgrund von Verschleiß nicht mehr so stark auf die Ventilstange drückt. Dieser Effekt tritt z.B. auf, wenn Graphit als Packungsmaterial eingesetzt wird. Bei nachstellbaren Packungen kann die Reibung allerdings auch größer werden, wenn z.B. die Packung nachgezogen wird und somit das Packungsmaterial wieder stärker auf die Ventilstange drückt.

Die bekannten Ventilstellungsregler haben vielfach Schwierigkeiten damit, solche regelungsbedingten Schwingungszustände zu erkennen. Werden derartige Schwingungen doch erkannt, erfolgen oft viel zu große Korrekturen - beispielsweise kann die Breite der Totzone auf die Amplitude der Schwingung eingestellt werden. Dies führt zu großen Abstrichen bei der erreichten Regelgüte. Als Folge davon muss die Breite der Totzone wieder reduziert werden, was z.B. zeitgesteuert geschehen kann. Wenn sich die Bedingungen am Ventil aber nicht geändert haben, kann dies dazu führen, dass es wieder zu Schwingungen kommt.

Die Veröffentlichung DE 10 2007 058 517 B4 offenbart einen digitalen Stellungsgeber zur Bedienung eines Ventilstellgliedes mit einem Positionierer in einer verfahrenstechnischen Anlage. Auch hier können Störgrößen wie z.B. Rauschen der Eingangssignale, Hysterese, Haft- und Gleitwiderstände zu unerwünschten Oszillationen des Positionierers führen. Diesen wird durch eine Totzone begegnet, die Veränderungen der Ausgangssignale des Stellungsgebers unterdrückt, sobald das Absolut der statischen oder dynamischen Differenzen zwischen Soll- und Istzustand (also der Regeldifferenz) bestimmte Grenzwerte unterschreitet. Die Totzone ist asymmetrisch und ihre Ausrichtung davon abhängig, ob der Sollwert steigt oder fällt. Ein Nachteil dabei ist, dass die Breite der Totzone nur einmal eingestellt wird und beispielsweise Veränderungen der Reibung im laufenden Betrieb nicht überprüft und berücksichtigt werden.

Aus der Veröffentlichung WO 2006/105677 A2 sind ein Verfahren und eine Vorrichtung zur Unterdrückung von Schwingungen in einer Anlage mit einem Stellantrieb zur Betätigung einer Klappe oder eines Ventils bekannt. Dieses System arbeitet mit einem Mikroprozessor, der einen Algorithmus ausführt, der eine adaptive Filterung mittels Wavelet-Analyse und eines Lag-Gliedes vorsieht. Dadurch werden alle Schwingungen im System gedämpft. Eine zusätzliche Detektion von Lastsprüngen ist daher erforderlich, damit die Dämpfung ausgeschaltet werden kann, wenn ein beabsichtigter Sollwert-Sprung erfolgt.

Die Veröffentlichung JP H04 203 601 A beschreibt ein System zur Stabilisierung der Öffnungs- bzw. Schließ-Steuerung eines Ventils, bei dem eine Kompensationsschaltung nach dem sogenannten Smith-Verfahren zwischen der Eingangs- und Ausgangsseite des Reglers parallel geschaltet ist, wodurch Öffnungs- bzw. Schließ-Schwingungen eines Ventilantriebs mit langen Druckluftleitungen verhindert werden sollen.

Ein anderes bekanntes Verfahren zum Verhindern von regelungsbedingten Schwingungen ist ebenfalls aus der US 2001/037159 A1 bekannt.

Aufgabe

Aufgabe der Erfindung ist es, Verfahren sowie Vorrichtungen anzugeben, welche das Auftreten von regelungsbedingten Schwingungen bei einem Ventil mit pneumatischem Antrieb und Stellungsregelung des Ventilglieds mit Integral-Anteil verhindert oder zumindest minimiert.

Lösung

Diese Aufgabe wird durch den Gegenstand des unabhängigen Anspruchs gelöst. Vorteilhafte Weiterbildungen des Gegenstands des unabhängigen Anspruchs sind in den Unteransprüchen gekennzeichnet. Der Wortlaut sämtlicher Ansprüche wird hiermit durch Bezugnahme zum Inhalt dieser Beschreibung gemacht.

Die Verwendung der Einzahl soll die Mehrzahl nicht ausschließen, was auch im umgekehrten Sinn zu gelten hat, soweit nichts Gegenteiliges offenbart ist.

Im Folgenden werden einzelne Verfahrensschritte näher beschrieben. Die Schritte werden in einer bevorzugten Variante der Erfindung in der angegebenen Reihenfolge ausgeführt. Die Schritte müssen aber nicht notwendigerweise in der angegebenen Reihenfolge durchgeführt werden, und das zu schildernde Verfahren kann auch weitere, nicht genannte Schritte aufweisen.

Zur Lösung der Aufgabe wird ein Verfahren zum Verhindern von regelungsbedingten Schwingungen der Position eines Ventilglieds bei einem Ventil mit pneumatischem Antrieb und Stellungsregelung des Ventilglieds vorgeschlagen. Als Voraussetzung weist die Stellungsregelung des Ventilglieds einen integrierenden Anteil auf, der einen Verstärkungsparameter und eine Totzone hat. Das Verfahren umfasst die folgenden Schritte:
Es wird überprüft, ob Schwingungen der Position des Ventilglieds vorliegen.

Für den Fall, dass Schwingungen festgestellt wurden, wird überprüft, ob die festgestellten Schwingungen aus Schwingungen des Sollwerts der Position des Ventilglieds resultieren.

Für den Fall, dass die Schwingungen nicht aus Schwingungen des Sollwerts der Position des Ventilglieds resultieren, wird die Totzone vergrößert und/oder der Verstärkungsparameter verkleinert.

Für den Fall, dass keine Schwingungen festgestellt wurden, wird überprüft, ob ein Verschleiß im pneumatischen Antrieb des Ventilglieds ein vorgegebenes Maß überschritten hat.

Sollte dies der Fall sein, wird die Totzone verkleinert und/oder der Verstärkungsparameter vergrößert.

Auf diese Weise können Schwingungen, die durch ungünstig eingestellte Parameter des I-Anteils der Regelung verursacht werden, erkannt und abgestellt werden. Eine weitere Veränderung der Parameter des I-Anteils der Regelung erfolgt erst dann, wenn aufgrund von Verschleiß (z.B. an einer Dichtung bzw. am Packungsmaterial) zu erwarten ist, dass die Reibung abgenommen hat und der I-Anteil der Regelung aggressiver eingestellt werden kann, ohne dass dabei wieder regelungsbedingte Schwingungen zu erwarten sind. Die Regeltoleranz wird dynamisch an veränderte Reibungskräfte im Ventilantrieb angepasst.

Zum Ermitteln der Schwingungen können Nulldurchgänge oder Extremwerte der Regeldifferenz aus Sollwert und Istwert oder Extremwerte des Istwertes der Position des Ventilglieds gezählt werden. Tritt innerhalb einer vorgegebenen Zeit eine genügende Anzahl von Nulldurchgängen oder Extremwerten der Regeldifferenz bzw. des Istwertes auf, kann von Schwingungen ausgegangen werden.

Regelungsbedingte Schwingungen der Position des Ventilglieds lassen sich besonders gut erkennen, wenn zum Überprüfen, ob die festgestellten Schwingungen aus Schwingungen des Sollwerts der Position des Ventilglieds resultieren, Extremwerte des Sollwertes der Position des Ventilglieds gezählt werden. Schwingungen der Position des Ventilglieds, die nicht aus Schwingungen des Sollwerts der Position des Ventilglieds resultieren, werden dann diagnostiziert, wenn zwischen zwei Extremwerten des Sollwertes mindestens drei, bevorzugt mindestens vier Nulldurchgänge oder Extremwerte der Regeldifferenz oder Extremwerte des Istwertes gezählt werden, und wenn der Istwert der Position oder der Regeldifferenz die Totzone verlassen hat.

Schwingungen, die durch ungünstig eingestellte Parameter des I-Anteils der Regelung verursacht werden, müssen von durch den Sollwert der Position des Ventilglieds vorgegebenen Schwingungen (die somit erwünscht sein könnten), unterschieden werden. Dies lässt sich besonders gut erreichen, wenn eine Periodendauer des Sollwerts und eine Periodendauer der Regeldifferenz bestimmt werden. Die festgestellten Schwingungen werden als Schwingungen des Sollwerts identifiziert, wenn die Periodendauer des Sollwerts nicht größer ist als die Periodendauer der Regeldifferenz. Dann oszilliert der Sollwert mindestens so schnell wie die Regeldifferenz, woraus sich schließen lässt, dass diese Schwingungen nicht durch Besonderheiten der verwendeten Regelung verursacht werden.

Um zu verhindern, dass Veränderungen an den Parametern des I-Anteils der Regelung vorgenommen werden, während sich die Regelung noch einschwingt, sollte in dem Fall, dass Schwingungen festgestellt wurden, die nicht aus Schwingungen des Sollwerts der Position des Ventilglieds resultieren, die Vergrößerung der Totzone und/oder die Verkleinerung des Verstärkungsparameters nur erfolgen, wenn der Betrag der Regeldifferenz unterhalb einer ersten vorgegebenen Schwelle liegt und eine vorgegebene Zeitspanne verstrichen ist.

Zu grobe Veränderungen der Regelparameter, die möglicherweise entgegengesetzte weitere Korrekturen erfordern, können vermieden werden, wenn Veränderungen der Totzone und/oder des Verstärkungsparameters besonders feinfühlig erfolgen. Dazu wird die Totzone in jedem einzelnen Fall maximal um 0,1 % verändert. Wird hingegen der Verstärkungsparameter geändert, sind Veränderungen um maximal 33 %, bevorzugt um maximal 25 %, besonders bevorzugt um maximal 10 % zulässig.

Ein besonders einfaches Vorgehen, um unnötige Versuche, die Parameter des I-Anteils der Regelung aggressiver einzustellen, zu vermeiden, ergibt sich, wenn als vorgegebenes Maß für den Verschleiß im pneumatischen Antrieb des Ventilglieds eine zweite Schwelle für den gesamten zurückgelegten Hub und eine dritte Schwelle für die Anzahl der Richtungswechsel des Hubs des Ventilglieds verwendet werden. Nur dann, wenn das Ventilglied die dadurch vorgegebene Strecke mit entsprechend vielen Richtungswechseln - die die Packung besonders belasten - zurückgelegt hat, werden die Parameter wie oben beschrieben strenger eingestellt, da zu erwarten ist, dass die Reibung unter diesen Umständen verschleißbedingt abgenommen hat. Bei diesem Vorgehen ist zusätzlich von Vorteil, dass im Stellungsregler bzw. im pneumatischen Antrieb des Ventils kein Drucksensor erforderlich ist.

Ist hingegen mindestens ein Drucksensor am pneumatischen Antrieb und/oder am Stellungsregler vorhanden, mit dem der Druck im Antrieb des Ventils bestimmt wird, lässt sich eine verschleißbedingte Reibungsabnahme besonders genau bestimmen, wenn mittels des vom Drucksensor bestimmten Drucks eine Hub-Druck-Kurve erstellt wird. Als vorgegebenes Maß für den Verschleiß im pneumatischen Antrieb des Ventilglieds wird dann eine vierte Schwelle für die Breite einer Hysterese in der Hub-Druck-Kurve verwendet. Diese Hysterese wird durch Reibung im Antrieb des Ventils verursacht, die Breite der Hysterese nimmt somit bei verringerter Reibung ab. Die vierte Schwelle kann beispielsweise bei der ersten Inbetriebnahme des Ventils anhand einer im nicht verschlissenen Zustand aufgenommenen Hub-Druck-Kurve festgelegt werden.

Eine Entscheidung, die Regelparameter des I-Anteils der Regelung aggressiver einzustellen, also die Totzone zu verkleinern und/oder den Verstärkungsparameter zu vergrößern, sollte nur erfolgen, wenn klar ist, dass der Zustand der Regelung stabil ist. Dies kann sichergestellt werden, wenn die Totzone nur dann verkleinert und/oder der Verstärkungsparameter vergrößert wird, wenn zusätzlich der Sollwert der Position des Ventilglieds sich langsamer als eine fünfte vorgegebene Schwelle ändert und/oder ein Vorzeichenwechsel der Regeldifferenz vorliegt und/oder der Istwert der Position des Ventilglieds stationär (d.h. stabil ausgeregelt) innerhalb der Totzone liegt.

Zu weitgehende Veränderungen der Regelparameter können verhindert werden, wenn das Verkleinern der Totzone und/oder das Vergrößern des Verstärkungsparameters aufgeschoben wird, bis der Istwert der Position des Ventilglieds die Totzone verlassen hat. Nachdem eine Entscheidung, die Regelung aggressiver einzustellen, getroffen wurde, wird also abgewartet, bis das Ventilglied eine neue Position anfährt. Mittels der Schwingungserkennung lässt sich so in dieser neuen Position unmittelbar überprüfen, ob die neu eingestellten Parameter zu aggressiv eingestellt sind.

Werden für die Verschleißerkennung die zweite Schwelle für den gesamten zurückgelegten Hub und die dritte Schwelle für die Anzahl der Richtungswechsel des Hubs verwendet, sollten dann, wenn die Totzone verkleinert und/oder der Verstärkungsparameter vergrößert wird, gespeicherte Werte für den gesamten zurückgelegten Hub und die Anzahl der Richtungswechsel des Hubs des Ventilglieds auf null gesetzt werden. Die entsprechenden Zähler werden also neu initialisiert, da die Regelung an den nun vorliegenden Verschleißzustand angepasst wurde.

Wird für die Verschleißerkennung die Breite der Hysterese in der Hub-Druck-Kurve verwendet, sollte dann, wenn die Totzone verkleinert und/oder der Verstärkungsparameter vergrößert wird, die vierte Schwelle für die Breite der Hysterese neu festgelegt werden, da die Regelung an den nun vorliegenden Verschleißzustand angepasst wurde.

Die Aufgabe wird zudem gelöst durch einen Stellungsregler für ein Ventil mit pneumatischem Antrieb, wobei die Regelung des Stellungsreglers einen integrierenden Anteil aufweist. Der Stellungsregler hat Mittel, die geeignet sind, die Schritte eines weiter oben beschriebenen Verfahrens auszuführen, unter anderem einen Positionssensor zum Messen des Istwertes des Hubs des Ventilglieds und ggf. einen Drucksensor. Die Mittel können beispielsweise eine Recheneinheit, Steuerelektronik, ein digitaler Signalprozessor (DSP), ein Mikrocontroller, ein Computer oder eine Mehrzahl davon in einem Netzwerk mit entsprechender Programmierung umfassen. Diese Programmierung kann beispielsweise im Rahmen einer festen Schaltungsanordnung der Recheneinheit, Steuerelektronik, des DSP und/oder des Mikrocontrollers oder mithilfe von feld-programmierbaren Gatteranordnungen (FPGA) umgesetzt werden. Die Mittel können auch darin bestehen, dass der Stellungsregler mit einer Leitwarte o.ä. verbunden ist, die die entsprechenden Recheneinheiten bzw. entsprechende Programmierung aufweist und Steuersignale an den Stellungsregler zurückübermittelt.

Außerdem wird die Aufgabe durch ein Ventil mit einem Stellungsregler, wie er soeben beschrieben wurde, und durch eine prozesstechnische Anlage mit einem derartigen Ventil gelöst.

Zur Lösung der Aufgabe dient weiterhin ein Computerprogramm, umfassend Befehle, die bewirken, dass der Stellungsregler, wie er oben beschrieben wurde, die Verfahrensschritte, die weiter oben beschrieben wurden, ausführt, sowie ein computerlesbares Medium, auf dem das beschriebene Computerprogramm gespeichert ist.

Weitere Einzelheiten und Merkmale ergeben sich aus der nachfolgenden Beschreibung von bevorzugten Ausführungsbeispielen in Verbindung mit den Figuren. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:

Fig. 1    einen Ablaufplan des beschriebenen Verfahrens;

Fig. 2    einen Teilablaufplan für den Abschnitt einer Ausführungsform des beschriebenen Verfahrens, in dem die Totzone vergrößert und/oder der Verstärkungsparameter verkleinert wird;

Fig. 3    einen Teilablaufplan für den Abschnitt einer Ausführungsform des beschriebenen Verfahrens, in dem die Totzone verkleinert und/oder der Verstärkungsparameter vergrößert wird.

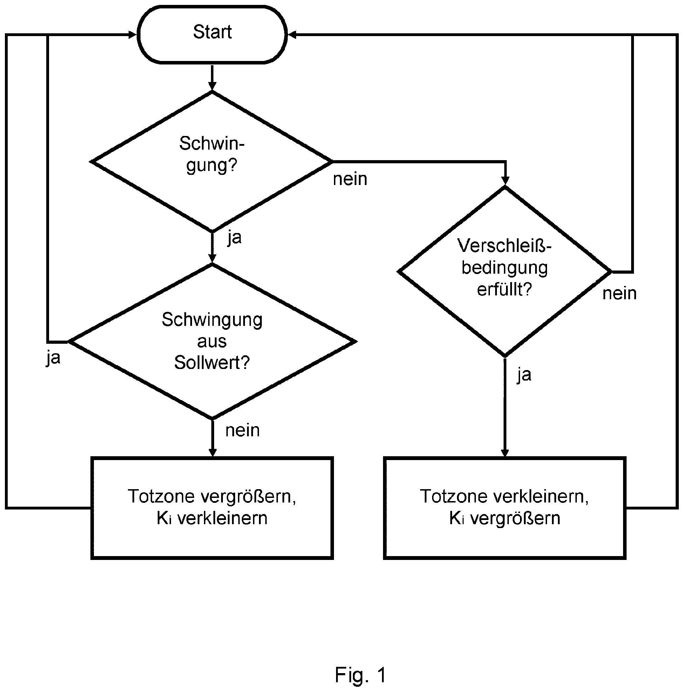

Im in Fig. 1 dargestellten Ablaufplan läuft das Verfahren in einer Schleife ab. Eine solche Ausgestaltung ist z.B. bei einer programmgesteuerten Form des Verfahrens besonders sinnvoll. Die Schleife kann beispielsweise ununterbrochen wiederholt werden, oder sie läuft in festen, periodischen Zeitabständen ab, z.B. einmal pro Stunde. Nach dem Start des Verfahrens wird als erstes abgefragt, ob eine Schwingung des Ventilglieds vorliegt, also eine Schwingung des Istwertes x. Ist dies der Fall, wird ermittelt, ob die Schwingung aus einer Schwingung des Sollwertes w herrührt. Derartige Schwingungen sollten vom beschriebenen Verfahren nicht verhindert werden und werden somit nicht verarbeitet. Rührt die Schwingung von einer Schwingung des Sollwertes her, wird also die Schleife beendet, das Verfahren kehrt an den Startpunkt zurück.

Ist die Schwingung jedoch nicht von einer Schwingung des Sollwertes vorgegeben, so werden die notwendigen Schritte durchgeführt, um die Totzone zu vergrößern und/oder den Verstärkungsparameter $K_i$ zu verkleinern. In der Ausführungsform des Verfahrens, die in Fig. 1 dargestellt ist, werden beide der genannten Änderungen vorgesehen, es ist aber selbstverständlich möglich, nur einen dieser Parameter anzupassen und den jeweils anderen konstant zu lassen. Nach diesen Anpassungen ist die Schleife beendet, das Verfahren kehrt an den Startpunkt zurück.

Wird bei der ersten Abfrage keine Schwingung festgestellt, prüft das beschriebene Verfahren, ob die für das jeweilige Ventil geltenden Verschleißbedingungen erfüllt sind. Dies kann z.B. dadurch geschehen, dass der Wert eines Hub-Zählers eine zweite Schwelle überschreitet und eine ebenfalls gezählte Anzahl von Richtungswechseln ebenfalls eine dritte Schwelle überschreitet, oder z.B. auch dadurch, dass die Breite der reibungsbedingten Hysterese in einer gemessenen Hub-Druck-Kurve eine vorgesehene vierte Schwelle unterschreitet. Sind die Verschleißbedingungen nicht erfüllt, ist keine Änderung der Parameter der Regelung des Ventils erforderlich, die Schleife wird somit beendet. Sind die Verschleißbedingungen erfüllt, werden die notwendigen Schritte durchgeführt, um die Totzone zu verkleinern und/oder den Verstärkungsparameter $K_i$ zu vergrößern. In der Ausführungsform des Verfahrens, die in Fig. 1 dargestellt ist, werden beide der genannten Änderungen vorgesehen, es ist aber selbstverständlich möglich, nur einen dieser Parameter anzupassen und den jeweils anderen konstant zu lassen. Nach diesen Anpassungen ist die Schleife beendet, das Verfahren kehrt an den Startpunkt zurück.

Die Schwingungserkennung erfolgt typischerweise dadurch, dass Nulldurchgänge der Regeldifferenz $e = w - x$ gezählt werden. Alternativ können auch die Extremwerte der Regeldifferenz gezählt werden. Eine weitere, besonders robuste Alternative ist das Zählen von Extremwerten des Istwertes $x$. Um zu erkennen, ob eine erkannte Schwingung aus dem Sollwert vorgegeben wird (und somit "gewollt" ist), werden vorzugsweise die Periodendauern der Regeldifferenz $e$ und des Sollwertes $w$ verglichen. Dabei wird geprüft, ob die Periodendauer des Sollwertes $w$ um einen gewissen Faktor, beispielsweise 3 oder 4, größer ist, als die Periodendauer der Regeldifferenz $e$. Dann schwingt die Regeldifferenz deutlich schneller als der Sollwert, so dass sichergestellt ist, dass die beobachtete Schwingung nicht aus dem Sollwert vorgegeben wird.

Einstellungen an den Regelparametern, also insbesondere an der Breite der Totzone und am Verstärkungsparameter $K_i$, werden vorzugsweise sehr feinfühlig vorgenommen. Besonders bevorzugt wird die Totzone um maximal $\pm 0,1$ % verändert, während am Verstärkungsparameter $K_i$ größere Änderungen von bis zu $\pm 33$ %, bevorzug bis zu $\pm 25$ %, besonders bevorzugt bis zu $\pm 10$ % möglich sind.

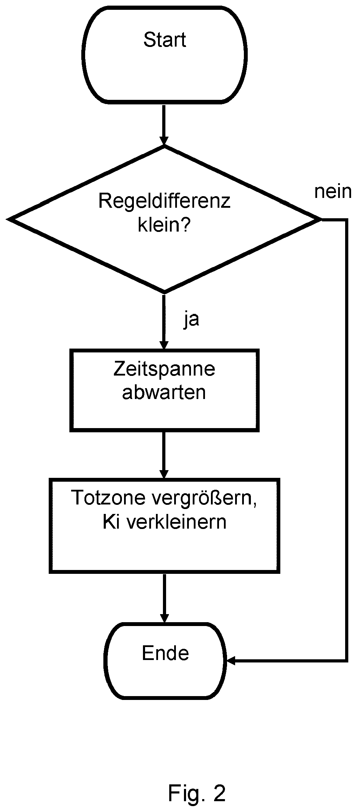

Ein möglicher Ablaufplan für die notwendigen Schritte, um die Totzone zu vergrößern und/oder den Verstärkungsparameter $K_i$ zu verkleinern, ist in Fig. 2 dargestellt. Unmittelbar nach dem Start kann noch eine zusätzliche Überprüfung vorgesehen sein, ob der Sollwert sich langsam ändert, also der Betrag der ersten zeitlichen Ableitung des Sollwerts unterhalb einer vorgegebenen Schranke liegt und nicht schwingt (nicht dargestellt). Diese Überprüfung ist allerdings optional und nicht zwingend erforderlich, da sie im übergeordneten Teil des beschriebenen Verfahrens, der in Fig. 1 dargestellt ist, in aller Regel bereits erfolgt ist.

Zunächst wird überprüft, ob der Betrag der Regeldifferenz klein ist, also unterhalb einer ersten vorgegebenen Schwelle liegt. Typischerweise wird diese erste Schwelle so gewählt, dass sichergestellt ist, dass sich der Istwert $x$ dem Sollwert $w$ bereits annähert - aber noch außerhalb der Totzone liegen darf. Ist dies nicht erfüllt, wird dieser Ablauf beendet bzw. abgebrochen, da eine Veränderung der Regelparameter nicht sinnvoll wäre. Ist die Regeldifferenz jedoch klein genug, wird eine vorgegebene Zeitspanne abgewartet, die an das normale Einschwingverhalten der Regelung angepasst sein sollte. Danach kann man sicher sein, dass das Einschwingen des geregelten Systems abgeschlossen ist. Erst danach werden die Regelparameter geändert, also vorzugsweise sowohl die Totzone vergrößert als auch der Verstärkungsparameter $K_i$ verkleinert. Es ist selbstverständlich auch möglich, nur einen dieser Parameter anzupassen und den jeweils anderen konstant zu lassen.

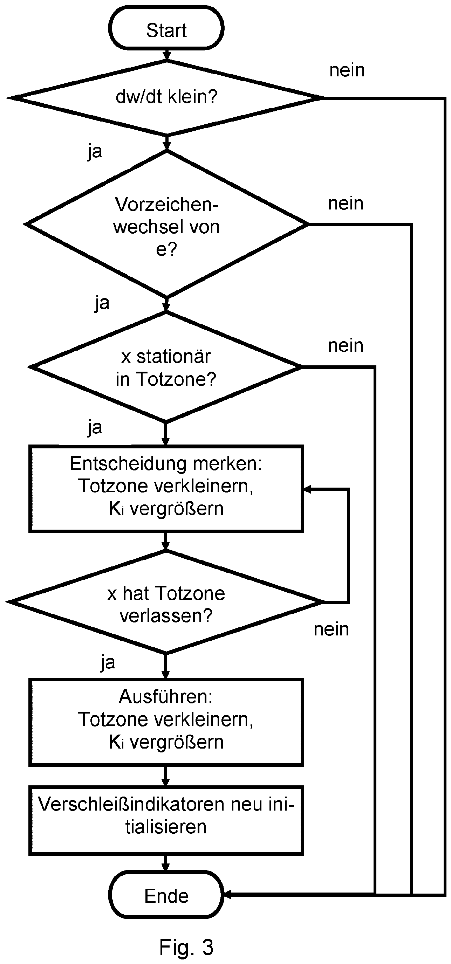

Ein möglicher Ablaufplan für die notwendigen Schritte, um die Totzone zu verkleinern und/oder den Verstärkungsparameter $K_i$ zu vergrößern, ist in Fig. 3 dargestellt. Zunächst werden weitere Voraussetzungen überprüft: Ändert sich der Sollwert $w$ nur langsam, d.h. unterhalb einer fünften vorgegebenen Schwelle? Liegt ein Vorzeichenwechsel der Regeldifferenz vor? Befindet sich der Istwert stationär in der Totzone? Bei der in Fig. 3 dargestellten Ausführungsform des Verfahrens werden diese Voraussetzungen sukzessive überprüft. Es sind jedoch auch andere, weniger bevorzugte Ausgestaltungen möglich, bei denen nur zwei oder nur eine dieser Voraussetzungen überprüft werden. Sind sie nicht erfüllt, wird dieser Ablauf beendet bzw. abgebrochen, da eine Veränderung der Regelparameter nicht sinnvoll wäre.

Sind die genannten Voraussetzungen jedoch erfüllt, merkt sich der Ablauf die Entscheidung, dass die Totzone verkleinert und/oder der Verstärkungsparameter $K_i$ vergrößert werden soll. Dies kann auf unterschiedliche Weise geschehen, je nachdem, wie das Verfahren genau gesteuert wird und auf was für einer Vorrichtung es abläuft. Beispielsweise kann in einem elektronischen Zwischenspeicher, z.B. im Arbeitsspeicher einer Recheneinrichtung, ein dafür vorgesehenes Bit gesetzt werden, oder es wird z.B. einer Variablen ein Wert zugeordnet.

Dann wird abgewartet, bis der Istwert $x$ die Totzone wieder verlassen hat. Das heißt, das Ventil muss sich bewegen, bevor die Regelparameter zu einer aggressiveren Regelung hin verändert werden. Damit wird sichergestellt, dass, falls die Parameter zu weit verändert werden, sehr schnell wieder eine Schwingung erkannt werden kann, worauf die Parameter wieder zu einer weniger aggressiven Regelung hin angepasst würden. Dieses Abwarten geschieht im in Fig. 3 dargestellten Ablauf durch eine Unterschleife, die vorzugsweise periodisch abläuft: Hat der Istwert die Totzone nicht verlassen, wird die soeben beschriebene Entscheidung weiter vorgemerkt.

Hat der Istwert die Totzone jedoch verlassen, werden vorzugsweise sowohl die Totzone verkleinert als auch der Verstärkungsparameter $K_i$ vergrößert. Es ist selbstverständlich auch möglich, nur einen dieser Parameter anzupassen und den jeweils anderen konstant zu lassen. Ist diese Veränderung erfolgt, werden die Verschleißindikatoren neu initialisiert, da die Regelung soeben an die verschleißbedingt verringerte Reibung angepasst wurde. Falls sie verwendet werden, werden also Hub- und Richtungswechselzähler auf null gesetzt. Falls stattdessen die Breite der Hysterese der Hub-Druck-Kurve als Verschleißindikator dient, wird die vierte Schwelle für die Breite dieser Hysterese neu bestimmt.

Glossar

Regeldifferenz, Regelabweichung

Unter der Regeldifferenz oder Regelabweichung $e$ wird die Differenz aus Sollwert $w$ und Istwert $x$ verstanden: $e = w - x$.

Regelung mit integrierendem Anteil

Integrierende Regler werden eingesetzt, um Regelabweichungen in jedem Betriebspunkt vollständig auszuregeln. Solange die Regelabweichung ungleich null ist, ändert sich der Betrag der Stellgröße. Erst wenn Führungs- und Regelgröße, d.h. Sollwert w und Istwert x, gleich groß sind, spätestens jedoch, wenn die Stellgröße ihren systembedingten Grenzwert erreicht (z.B. maximale Spannung), ist die Regelung eingeschwungen. Die mathematische Formulierung dieses integralen Verhaltens lautet: Der Wert der Stellgröße y ist dem Zeitintegral der Regeldifferenz e proportional:

$$y = K_i \int e \, dt$$

Dabei ist der Verstärkungsparameter $K_i$ in der Regel als Kehrwert der Integrierzeit definiert.

Stopfbuchse

Die Stopfbuchse oder Stopfbüchse (in der Schweiz: Packung), früher auch Stoffbuchse genannt, da als Dichtmaterial u. a. Filz verwendet wurde, ist ein Dichtelement des Maschinenbaus. Sie leistet die Abdichtung einer drehenden Welle oder einer hin- und hergehenden Stange aus einem Gehäuse gegen einen einwirkenden Flüssigkeits- oder Dampfdruck sowie gegen eindringenden Schmutz oder austretendes Schmiermittel.

Eine Stopfbuchse besteht aus der Stopfbuchspackung (der eigentlichen Dichtung) und einer Stopfbuchsbrille (einer flanschähnlichen Hülse), mit der die Stopfbuchspackung mittels Schrauben oder Federn axial verpresst wird. Bei elastischem Dichtmaterial wird durch die axiale Pressung auch eine radiale Pressung der Stopfbuchspackung auf der Welle erreicht. So kann der Dichtspalt auf ein den Betriebsbedingungen angepasstes Minimum eingestellt werden.

Nachteile: Eine geringe Leckage ist nicht gänzlich auszuschließen. Durch die große Berührfläche, verbunden mit einer hohen Pressung, die zur leckagearmen Abdichtung notwendig ist, bewirken Stopfbuchspackungen eine relativ hohe Reibung.

Vorteile: Da die Dichtpressung über die Stopfbuchsbrille von außen verpresst wird, stehen viele geeignete Materialien zur Verfügung (z.B. Faserwerkstoffe, Graphit). Diese können z.T. auch bei hohen Temperaturen und aggressiven Medien eingesetzt werden, für welche die heute überwiegend verwendeten Elastomerdichtungen (z. B. O-Ringe, Radialwellendichtringe u.Ä.) nicht geeignet sind. Ein weiterer Vorteil ist, dass durch Nachziehen der Stopfbuchsbrille Leckagen wieder verringert werden können, die durch Verschleiß des Dichtungsmaterials entstehen. (Nach https://de.wikipedia.org/wiki/Stopfbuchse)

Totzone (auch *Tote Zone*)

Eine Totzone ist ein Bereich von Eingangswerten eines Regelungs- oder Signalverarbeitungssystems, für den der Ausgangswert Null ist. In Regelungssystemen dient eine solche Totzone im Allgemeinen dazu, unerwünscht häufige Zyklen von Schaltvorgängen zu unterdrücken. Bei Regelsystemen handelt es sich bei der Totzone typischerweise um einen Toleranzbereich für den Istwert x um den Sollwert w, oder - äquivalent dazu - um einen Toleranzbereich für die Regeldifferenz e um Null. Typischerweise wird eine Totzone dem eigentlichen Regler oder auch nur dem integrierenden Anteil des Reglers vorgeschaltet.

zitierte Literatur

zitierte Patentliteratur

DE 10 2007 058 517 B4
JP H04 203 601 A
WO 2006/105677 A2
US 2001/037159 A1

**Patentansprüche**

1. Verfahren zum Verhindern von regelungsbedingten Schwingungen der Position eines Ventilglieds bei einem Ventil mit pneumatischem Antrieb und Stellungsregelung des Ventilglieds,

   1.1 wobei die Stellungsregelung des Ventilglieds einen integrierenden Anteil aufweist;
   1.2 wobei der integrierende Anteil der Stellungsregelung einen Verstärkungsparameter und eine Totzone aufweist;

   wobei das Verfahren die folgenden Schritte umfasst:

   1.3 Überprüfen des Vorliegens von Schwingungen der Position des Ventilglieds;
   1.4 für den Fall, dass Schwingungen festgestellt wurden:

      1.4.1 Überprüfen, ob die festgestellten Schwingungen aus Schwingungen des Sollwerts der Position des Ventilglieds resultieren;
      1.4.2 für den Fall, dass die Schwingungen nicht aus Schwingungen des Sollwerts der Position des Ventilglieds resultieren, wird die Totzone vergrößert und/oder der Verstärkungsparameter verkleinert;

   1.5 für den Fall, dass keine Schwingungen festgestellt wurden:

1.5.1 Überprüfen, ob ein Verschleiß im pneumatischen Antrieb des Ventilglieds ein vorgegebenes Maß überschritten hat;
1.5.2 sollte dies der Fall sein, wird die Totzone verkleinert und/oder der Verstärkungsparameter vergrößert.

2. Verfahren nach dem vorhergehenden Anspruch, **dadurch gekennzeichnet,**

2.1 dass zum Ermitteln der Schwingungen Nulldurchgänge oder Extremwerte der Regeldifferenz aus Sollwert und Istwert oder Extremwerte des Istwertes der Position des Ventilglieds gezählt werden; und / oder
2.2 dass zum Überprüfen, ob die festgestellten Schwingungen aus Schwingungen des Sollwerts der Position des Ventilglieds resultieren, Extremwerte des Sollwertes der Position des Ventilglieds gezählt werden,
2.3 wobei Schwingungen der Position des Ventilglieds, die nicht aus Schwingungen des Sollwerts der Position des Ventilglieds resultieren, dann diagnostiziert werden,
2.3.1 wenn zwischen zwei Extremwerten des Sollwertes mindestens drei Nulldurchgänge oder Extremwerte der Regeldifferenz oder Extremwerte des Istwertes gezählt werden, und
2.3.2 wenn der Istwert der Position oder der Regeldifferenz die Totzone verlassen hat.

3. Verfahren nach Anspruch 1, **dadurch gekennzeichnet,**

3.1 dass zum Überprüfen, ob die festgestellten Schwingungen aus Schwingungen des Sollwerts der Position des Ventilglieds resultieren, eine Periodendauer des Sollwerts und eine Periodendauer der Regeldifferenz bestimmt werden,
3.2 wobei die festgestellten Schwingungen als Schwingungen des Sollwerts identifiziert werden, wenn die Periodendauer des Sollwerts nicht größer ist als die Periodendauer der Regeldifferenz.

4. Verfahren nach einem der vorhergehenden Ansprüche, **dadurch gekennzeichnet,**

4.1 dass für den Fall, dass Schwingungen festgestellt wurden, die nicht aus Schwingungen des Sollwerts der Position des Ventilglieds resultieren, die Vergrößerung der Totzone und/oder die Verkleinerung des Verstärkungsparameters nur erfolgen, wenn

4.1.1 die Regeldifferenz unterhalb einer ersten vorgegebenen Schwelle liegt und
4.1.2 eine vorgegebene Zeitspanne verstrichen ist.

5. Verfahren nach einem der vorhergehenden Ansprüche, **dadurch gekennzeichnet,**

5.1 dass die Totzone in jedem einzelnen Fall maximal um 0,1 % verändert wird; und/oder
5.2 dass der Verstärkungsparameter in jedem einzelnen Fall um maximal 33 %, bevorzugt um maximal 25 %, besonders bevorzugt um maximal 10 % verändert wird.

6. Verfahren nach einem der vorhergehenden Ansprüche, **dadurch gekennzeichnet,** **dass** als vorgegebenes Maß für den Verschleiß im pneumatischen Antrieb des Ventilglieds eine zweite Schwelle für den gesamten zurückgelegten Hub und eine dritte Schwelle für die Anzahl der Richtungswechsel des Hubs des Ventilglieds verwendet werden.

7. Verfahren nach einem der vorhergehenden Ansprüche 1 bis 5,
7.1 wobei der pneumatische Antrieb und/oder die Stellungsregelung des Ventilglieds mindestens einen Drucksensor aufweist, um den Druck im Antrieb zu bestimmen,
**dadurch gekennzeichnet,**

7.2 dass mittels des vom Drucksensor bestimmten Drucks eine Hub-Druck-Kurve erstellt wird;
7.3 wobei als vorgegebenes Maß für den Verschleiß im pneumatischen Antrieb des Ventilglieds eine vierte Schwelle für die Breite einer Hysterese in der Hub-Druck-Kurve verwendet wird.

8. Verfahren nach einem der vorhergehenden Ansprüche, **dadurch gekennzeichnet,** **dass** nur dann die Totzone verkleinert und/oder der Verstärkungsparameter vergrößert wird, wenn zusätzlich

8.1 der Sollwert der Position des Ventilglieds sich langsamer als eine fünfte vorgegebene Schwelle ändert und/oder
8.2 ein Vorzeichenwechsel der Regeldifferenz vorliegt und/oder
8.3 der Istwert der Position des Ventilglieds stationär innerhalb der Totzone liegt.

9. Verfahren nach einem der vorhergehenden Ansprüche,
**dadurch gekennzeichnet,**
**dass** das Verkleinern der Totzone und/oder das Vergrößern des Verstärkungsparameters aufgeschoben wird, bis der Istwert der Position des Ventilglieds die Totzone verlassen hat.

10. Verfahren nach Anspruch 6,
**dadurch gekennzeichnet,**
**dass** dann, wenn die Totzone verkleinert und/oder der Verstärkungsparameter vergrößert wird, gespeicherte Werte für den gesamten zurückgelegten Hub und die Anzahl der Richtungswechsel des Hubs des Ventilglieds auf null gesetzt werden.

11. Verfahren nach Anspruch 7,
**dadurch gekennzeichnet,**
**dass** dann, wenn die Totzone verkleinert und/oder der Verstärkungsparameter vergrößert wird, die vierte Schwelle neu festgelegt wird.

12. Stellungsregler für ein Ventil mit pneumatischem Antrieb,

12.1 wobei die Regelung des Stellungsreglers einen integrierenden Anteil aufweist,
12.2 mit Mitteln, die geeignet sind, die Schritte des Verfahrens nach einem der vorhergehenden Verfahrensansprüche auszuführen.

13. Ventil mit einem Stellungsregler nach dem unmittelbar vorhergehenden Anspruch.

14. Prozesstechnische Anlage mit einem Ventil nach dem unmittelbar vorhergehenden Anspruch.

15. Computerprogramm, umfassend Befehle, die bewirken, dass der Stellungsregler nach Anspruch 12 die Verfahrensschritte nach einem der Verfahrensansprüche 1 bis 11 ausführt.

16. Computerlesbares Medium, auf dem das Computerprogramm nach dem unmittelbar vorhergehenden Anspruch gespeichert ist.

**Claims**

1. Method for preventing control-induced oscillations of the position of a valve member in a valve with pneumatic actuator and position control of the valve member,

1.1 wherein the position control of the valve member has an integrating component;
1.2 wherein the integrating component of the position control has a gain parameter and a dead zone;

the method comprising the following steps:

1.3 verifying the presence of oscillations of the position of the valve member;
1.4 in the event that oscillations were detected:

1.4.1 checking whether the detected oscillations result from oscillations of the set point of the position of the valve member;
1.4.2 in case the oscillations do not result from oscillations of the set point of the valve member position, the dead zone is increased and/or the gain parameter is decreased;

1.5 in the event that no oscillations were detected:

1.5.1 checking whether wear in the pneumatic actuator of the valve member has exceeded a predetermined measure;
1.5.2 if this is the case, the dead zone is decreased and/or the gain parameter is increased.

2. Method according to the preceding claim,
**characterized in that**

2.1 in order to determine the oscillations, zero crossings or extreme values of the control difference between the setpoint value and the actual value or extreme values of the actual value of the position of the valve member are counted; and / or
2.2 extreme values of the setpoint value of the position of the valve member are counted in order to check whether the detected oscillations result from oscillations of the setpoint value of the position of the valve member,
2.3 wherein oscillations of the position of the valve member which do not result from oscillations of the setpoint value of the position of the valve member are then diagnosed,
2.3.1 if at least three zero crossings or extreme values of the control difference or extreme values of the actual value are counted between two extreme values of the setpoint value, and
2.3.2 if the actual value of the position or the control difference has left the dead zone.

3. Method according to claim 1,
**characterized in that**

3.1 for checking whether the detected oscillations result from oscillations of the setpoint value of the position of the valve member, a period duration of the setpoint value and a period duration of the control difference are determined,

3.2 wherein the detected oscillations are identified as oscillations of the setpoint value if the period duration of the setpoint value is not greater than the period duration of the control difference.

4. Method according to any one of the preceding claims,
**characterized in that**

4.1 in the case where oscillations have been detected which do not result from oscillations of the setpoint of the position of the valve member, the increase of the dead band and/or the decrease of the gain parameter take place only if
4.1.1 the control difference is below a first predetermined threshold and
4.1.2 a predetermined time period has elapsed.

5. Method according to any one of the preceding claims,
**characterized in that**

5.1 the dead zone is changed in each individual case by a maximum of 0.1 %; and/or
5.2 the gain parameter is changed in each individual case by a maximum of 33%, preferably by a maximum of 25%, particularly preferably by a maximum of 10%.

6. Method according to any one of the preceding claims,
**characterized in that**
a second threshold for the total travelled stroke and a third threshold for the number of directional changes of the stroke of the valve member are used as a predetermined measure for the wear in the pneumatic actuator of the valve member.

7. Method according to any one of the preceding claims 1 to 5,
7.1 wherein the pneumatic actuator and/or the position control of the valve member has at least one pressure sensor to determine the pressure in the actuator,
**characterized in that**

7.2 a stroke-pressure curve is generated by means of the pressure determined by the pressure sensor;
7.3 wherein a fourth threshold for the width of a hysteresis in the stroke-pressure curve is used as a predetermined measure for the wear in the pneumatic actuator of the valve member.

8. Method according to any one of the preceding claims,
**characterized in that**

the dead zone is decreased and/or the gain parameter is increased only if in addition

8.1 the setpoint value of the position of the valve member changes more slowly than a fifth predetermined threshold and/or
8.2 there is a sign change of the control difference and/or
8.3 the actual value of the position of the valve member is stationary within the dead zone.

9. Method according to any one of the preceding claims,
**characterized in that**
the decrease of the dead zone and/or the increase of the gain parameter is postponed until the actual value of the position of the valve member has left the dead zone.

10. Method according to claim 6,
**characterized in that**
when the dead zone is decreased and/or the gain parameter is increased, stored values for the total travelled stroke and the number of directional changes of the stroke of the valve member are set to zero.

11. Method according to claim 7,
**characterized in that**
when the dead zone is decreased and/or the gain parameter is increased, the fourth threshold is redefined.

12. Positioner for a valve with pneumatic actuator,

12.1 wherein the control of the positioner has an integrating component,
12.2 with means suitable for carrying out the steps of the method according to any one of the preceding method claims.

13. Valve having a positioner according to the immediately preceding claim.

14. Process plant with a valve according to the immediately preceding claim.

15. Computer program comprising instructions which cause the positioner according to claim 12 to execute the method steps according to any one of the method claims 1 to 11.

16. Computer-readable medium on which the computer program according to the immediately preceding claim is stored.

**Revendications**

1. Procédé pour empêcher les oscillations de la position d'un élément de vanne dues à la régulation dans le cas d'une vanne avec entraînement pneumatique et régulation de la position de l'élément de vanne,

   1.1 dans lequel la régulation de position de l'élément de vanne comprend une partie d'intégration ;
   1.2 dans lequel la partie intégratrice de la commande de position comprend un paramètre de gain et une zone morte ;

   dans lequel le procédé comprend les étapes suivantes :

   1.3 vérifier la présence d'oscillations de la position de l'élément de vanne ;
   1.4 dans le cas où des vibrations ont été détectées :

      1.4.1 vérifier si les oscillations détectées résultent d'oscillations de la consigne de la position de l'élément de vanne ;
      1.4.2 dans le cas où les vibrations ne résultent pas de vibrations de la consigne de position de l'élément de vanne, la zone morte est augmentée et/ou le paramètre de gain est diminué;

   1.5 dans le cas où aucune vibration n'a été détectée :

      1.5.1 vérifier si une usure de l'entraînement pneumatique de l'élément de vanne a dépassé un niveau prédéterminé ;
      1.5.2 si c'est le cas, la zone morte est réduite et/ou le paramètre de gain est augmenté.

2. Procédé selon la revendication précédente, caractérisé en ce

   2.1 que, pour déterminer les oscillations, on compte les passages par zéro ou les valeurs extrêmes de la différence de régulation entre la consigne et la valeur réelle ou les valeurs extrêmes de la valeur réelle de la position de l'élément de vanne ; et / ou
   2.2 que, pour vérifier si les oscillations constatées résultent d'oscillations de la consigne de la position de l'élément de vanne, on compte des valeurs extrêmes de la consigne de la position de l'élément de vanne,
   2.3 dans lequel les oscillations de la position de l'élément de vanne qui ne résultent pas d'oscillations de la valeur de consigne de la position de l'élément de vanne sont diagnostiquées

      2.3.1 si au moins trois passages par zéro ou valeurs extrêmes de la différence de réglage ou valeurs extrêmes de la consigne sont comptés entre deux valeurs extrêmes de la consigne, et
      2.3.2 si la valeur réelle de la position ou de la différence de réglage a quitté la zone morte.

3. Procédé selon la revendication 1, **caractérisé en ce**

   3.1 que, pour vérifier si les oscillations constatées résultent d'oscillations de la consigne de la position de l'élément de vanne, on détermine une durée de période de la consigne et une durée de période de la différence de régulation,
   3.2 dans lequel les oscillations constatées sont identifiées comme étant des oscillations de la consigne si la durée de la période de la consigne n'est pas supérieure à la durée de la période de la différence de réglage.

4. Procédé selon l'une des revendications précédentes, **caractérisé en ce que**

   4.1 dans le cas où des oscillations ont été identifiées qui ne résultent pas d'oscillations de la consigne de la position de l'élément de vanne, l'augmentation de la zone morte et/ou la diminution du paramètre de gain ne sont effectuées que si
   4.1.1 la différence de réglage est inférieure à un premier seuil prédéterminé et
   4.1.2 une période de temps prédéterminée s'est écoulée.

5. Procédé selon l'une quelconque des revendications précédentes, **caractérisé en ce**

   5.1 que la zone morte est modifiée au maximum de 0,1 % dans chaque cas individuel ; et/ou
   5.2 que le paramètre de gain est modifié dans chaque cas individuel de 33 % au maximum, de préférence de 25 % au maximum, de manière particulièrement préférée de 10 % au maximum.

6. Procédé selon l'une quelconque des revendications précédentes, **caractérisé en ce que** l'on utilise comme mesure prédéterminée de l'usure dans l'entraînement pneumatique de l'élément de vanne un deuxième seuil pour la course totale parcourue et un troisième seuil pour le nombre de changements de direction de la course de l'élément de vanne.

7. Procédé selon l'une quelconque des revendications 1 à 5 précédentes,

7.1 dans lequel l'entraînement pneumatique et/ou la régulation de position de l'élément de vanne comprend au moins un capteur de pression pour déterminer la pression dans l'entraînement, **caractérisé en ce**

7.2 qu'une courbe levage-pression est établie au moyen de la pression déterminée par le capteur de pression ;

7.3 dans lequel on utilise comme mesure prédéterminée de l'usure dans l'entraînement pneumatique de l'élément de vanne un quatrième seuil pour la largeur d'une hystérésis dans la courbe levage-pression.

8. Procédé selon l'une quelconque des revendications précédentes,
**caractérisé en ce**
**que** la zone morte est réduite et/ou le paramètre de gain est augmenté uniquement si, en outre

8.1 la consigne de position de l'élément de vanne varie moins vite qu'un cinquième seuil prédéterminé et/ou

8.2 il y a un changement de signe de la différence de réglage et/ou

8.3 la valeur réelle de la position de l'élément de vanne est stationnaire à l'intérieur de la zone morte.

9. Procédé selon l'une quelconque des revendications précédentes,
**caractérisé en ce**
**que** la réduction de la zone morte et/ou l'augmentation du paramètre de gain sont différées jusqu'à ce que la valeur réelle de la position de l'élément de vanne ait quitté la zone morte.

10. Procédé selon la revendication 6,
**caractérisé en ce**
**que**, lorsque la zone morte est réduite et/ou le paramètre de gain est augmenté, les valeurs mémorisées pour la course totale parcourue et le nombre de changements de direction de la course de l'élément de vanne sont mises à zéro.

11. Procédé selon la revendication 7,
**caractérisé en ce**
**que**, lorsque la zone morte est réduite et/ou le paramètre de gain est augmenté, le quatrième seuil est redéfini.

12. Positionneur pour une vanne à entraînement pneumatique,

12.1 dans lequel la régulation du positionneur comprend une partie intégratrice,

12.2 avec des moyens aptes à mettre en oeuvre les étapes du procédé selon l'une quelconque des revendications de procédé précédentes.

13. Vanne avec un positionneur selon la revendication immédiatement précédente.

14. Installation de traitement comprenant une vanne selon la revendication précédente.

15. Programme d'ordinateur comprenant des instructions pour que le positionneur selon la revendication 12 exécute les étapes du procédé selon l'une quelconque des revendications 1 à 11.

16. Support lisible par ordinateur sur lequel est stocké le programme d'ordinateur selon la revendication précédente.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007058517 B4
- WO 2006105677 A2
- JP H04203601 A
- US 2001037159 A1